# FASCICULE DE BREVET EUROPEEN

(11) **EP 3 959 141 B1**
(45) Date de publication et mention de la délivrance du brevet: **12.10.2022**
(21) Numéro de dépôt: 20808172.9
(22) Date de dépôt: 24.11.2020
(51) Int. Cl.: B64G 1/22, H01Q 1/28, H02S 30/20, H01Q 1/08, H01Q 1/12, B64G 1/44, B64G 1/66

(54) **STRUCTURE DÉPLOYABLE DE GRANDE DIMENSION**
ENTFALTBARE STRUKTUR MIT GROSSEN ABMESSUNGEN
LARGE-SIZED DEPLOYABLE STRUCTURE

(30) Priorité: 02.12.2019 FR 1913616
(43) Date de publication de la demande: 02.03.2022
(73) Titulaire: Airbus Defence and Space SAS, 31402 Toulouse Cedex 4 (FR); Centre National d'Etudes Spatiales (CNES), 75001 Paris (FR)
(72) Inventeur: CAUJOLLE, Romain, 31402 Toulouse cedex 4 (FR)
(74) Mandataire: Ipside
(86) Numéro de dépôt international: PCT/EP2020/083244
(87) Numéro de publication internationale: WO 2021/110489

(56) Documents cités:
- EP-A2- 1 332 966
- FR-A1- 2 749 273
- JP-A- H02 283 597
- US-A1- 2018 201 393

## Description

### Domaine technique de l'invention

La présente invention a pour objet une structure déployable. L'invention trouve une application dans le domaine spatial, plus particulièrement aux équipements spatiaux qui doivent être déployés en orbite, notamment aux équipements spatiaux pour satellites, tels que par exemple des antennes ou des générateurs solaires.

L'invention a trait de manière générale au stockage et au déploiement d'équipements spatiaux de grande dimension.

### Technique antérieure

Les engins ou véhicules spatiaux, tels que, mais non limitativement, les satellites, comprennent des équipements spatiaux, notamment des antennes ou encore des générateurs solaires sans que ces exemples soient limitatifs de l'invention.

Une antenne (par analogie, un générateur solaire) présente généralement des dimensions telles qu'elle ne peut pas être placée en configuration opérationnelle sous la coiffe du lanceur permettant de mettre en orbite le satellite. L'antenne est ainsi, de manière classique, généralement formée par un ensemble de panneaux articulés entre eux deux à deux de façon à pouvoir prendre d'une part une configuration stockée pour le lancement, dans laquelle lesdits panneaux sont empilés les uns sur les autres, et d'autre part une configuration déployée ou opérationnelle, après la mise en orbite du satellite, dans laquelle les panneaux sont déployés et viennent former l'antenne.

Il existe un besoin croissant, lors des missions spatiales, de recourir à des antennes de dimensions de plus en plus grandes.

Or une augmentation de la dimension de ces antennes présente de nombreux inconvénients, notamment celui du stockage de celles-ci sous la coiffe du lanceur, pendant la phase de lancement. En effet, le volume disponible pour le stockage d'une antenne sous la coiffe du lanceur reste limité et n'est pas extensible.

Le document US 2018/201393 décrit un exemple d'une structure déployable à base de panneaux hexagonaux.

### Présentation de l'invention

La présente invention vise à remédier aux inconvénients précités.

A cet effet, il est proposé par la présente invention une structure déployable. La structure déployable comporte :
- une structure porteuse,
- une structure segmentée comportant N ensembles de n panneaux élémentaires adjacents articulés deux à deux entre eux, N étant un nombre entier supérieur ou égal à 3, et n un nombre entier pair, positif non nul,
les N ensembles étant reliés deux à deux par un panneau de liaison, la structure segmentée étant configurée pour passer, lors d'une phase de déploiement :
∘ d'une configuration stockée dans laquelle, pour chaque ensemble, les panneaux intermédiaires sont repliés les uns contre les autres, lesdits panneaux élémentaires repliés de chaque ensemble délimitant une cavité centrale,
∘ à une configuration déployée, dans laquelle les panneaux intermédiaires de chaque ensemble et les panneaux de liaison sont disposés dans un même plan, dite plan de déploiement, ladite structure segmentée présentant, en configuration déployée, une forme polygonale régulière creuse.

La structure déployable comporte avantageusement un dispositif de déploiement comportant au moins un bras articulé, ledit au moins un bras articulé comportant une pluralité d'éléments successifs articulés deux à deux entre eux, une première extrémité dudit au moins un bras articulé étant reliée à la structure porteuse et une seconde extrémité dudit au moins un bras articulé étant reliée à un ensemble de n panneaux élémentaires. Le au moins un bras articulé est configuré pour passer de la configuration stockée dans laquelle les éléments dudit au moins un bras articulé sont repliés, à la configuration déployée dans laquelle le au moins un bras articulé est déployé. Le au moins un bras articulé, dans la configuration stockée, est avantageusement disposé dans la cavité centrale.

On comprend bien que, lorsque la structure déployée est dans la configuration stockée, respectivement la configuration déployée, le dispositif de déploiement et en conséquence la structure déployable en tant que telle sont dans la même configuration. Ainsi, l'expression « configuration stockée » ou « configuration déployé » s'emploie indifféremment pour la structure déployable, la structure segmentée ou le dispositif de déploiement.

Une telle structure déployable permet avantageusement d'augmenter la surface utile de la structure segmentée, lorsqu'elle est en configuration déployée, tout en présentant un volume réduit, lorsqu'elle est en configuration stockée, lui permettant d'être stockée dans le volume restreint.

L'agencement des panneaux élémentaires par groupe, pour réaliser des ensembles, présente l'avantage de permettre, lorsque la structure segmentée est en configuration stockée, un empilement des panneaux élémentaires les uns contre les autres par ensemble et non un empilement de tous les panneaux élémentaires formant la structure segmentée les uns contre les autres, ce qui modifie le volume final pris par la structure segmentée.

De plus, les N ensembles de la structure segmentée, lorsqu'elle est en configuration stockée, délimitent intérieurement une cavité centrale qui permet le positionnement et le stockage du au moins un bras articulé du dispositif de déploiement. Le dispositif de déploiement n'augmente ainsi nullement le volume final pris par la structure segmentée, lorsqu'elle est en configuration stockée. De manière préférentielle, la structure segmentée forme, en configuration déployée, une antenne ou un générateur solaire, notamment pour le domaine spatial.

Dans des modes particuliers de réalisation, l'invention répond en outre aux caractéristiques suivantes, mises en œuvre séparément ou en chacune de leurs combinaisons techniquement opérantes.

Dans des modes particuliers de réalisation de l'invention, pour augmenter la raideur de la structure segmentée en configuration déployée, le dispositif de déploiement comporte une pluralité de bras articulés.

Ainsi, lorsque le dispositif de déploiement comporte une pluralité de bras articulés, chaque bras articulé comporte une pluralité d'éléments successifs articulés deux à deux entre eux. Une première extrémité de chaque bras articulé est reliée à la structure porteuse et une seconde extrémité de chaque bras articulé étant reliée à un ensemble de n panneaux élémentaires. Les bras articulés sont configurés pour passer de la configuration stockée dans laquelle, pour chaque bras articulé, les éléments dudit bras articulé sont repliés, à la configuration déployée dans laquelle, tous les bras articulés sont déployés. Tous les bras articulés, dans la configuration stockée, sont disposés dans la cavité centrale.

De préférence, le nombre de bras articulés du dispositif de déploiement est compris entre 1 et N. De manière encore plus préférentielle, le nombre de bras articulés est de N. ainsi, chaque bras articulé est agencé de sorte à être relié, au niveau de sa seconde extrémité, respectivement à un ensemble de n panneaux élémentaires.

Dans des modes particuliers de réalisation de l'invention, pour rigidifier les panneaux de liaison, la structure segmentée comporte des éléments de renfort, chaque élément de renfort étant disposé au niveau d'un panneau de liaison. Dans des modes particuliers de réalisation de l'invention, la structure porteuse se présente sous la forme d'une croix à N branches.

Dans des modes particuliers de réalisation de l'invention, les panneaux élémentaires adjacents de chaque ensemble sont articulés deux à deux entre eux par une première articulation. Un panneau élémentaire, dit d'extrémité, d'un ensemble est relié à un panneau de liaison par une première articulation.

De préférence, les panneaux élémentaires adjacents sont articulés deux à deux entre eux par deux premières articulations présentant un même axe de rotation, une première articulation au niveau de chaque flanc longitudinal des panneaux élémentaires.

Dans un exemple préféré de réalisation, une première articulation se présente sous la forme d'un ensemble chape-doigt réunis par un arbre.

Dans des exemples de réalisation, lorsque le nombre de panneaux élémentaires de chaque ensemble équivaut à 4p, p entier positif non nul, chaque branche de la structure porteuse est agencée de sorte que, lorsque la structure segmentée est en configuration stockée, les premières articulations d'un ensemble, situées dans une partie basse de la structure segmentée, sont réparties symétriquement de part et d'autre d'une branche de la structure porteuse.

Dans des exemples de réalisation, lorsque le nombre de panneaux élémentaires de chaque ensemble équivaut à 4p+2, p entier positif non nul, :
- deux panneaux élémentaires, d'un même ensemble, reliés par une première articulation située sensiblement à mi-longueur dudit ensemble lorsque la structure segmentée est déployée, et dite première articulation centrale, présentent une longueur inférieure aux autres panneaux élémentaires,
- chaque branche de la structure porteuse est agencée de sorte que, lorsque la structure segmentée est en configuration stockée, la première articulation centrale, située dans une partie basse de la structure segmentée, reposent sur une branche de la structure porteuse, et les autres premières articulations de l'ensemble situées dans la partie basse de la structure segmentée sont disposées symétriquement de part et d'autre de ladite branche.

Dans des modes particuliers de réalisation de l'invention, la structure déployable comporte un dispositif de gerbage pour maintenir temporairement la structure segmentée en configuration stockée, le dispositif de gerbage comportant une pluralité de mécanismes de maintien et de libération pour chaque ensemble. Un tel mode de réalisation est utilisé lorsque la structure déployable est destinée à une application spatiale. En effet, en configuration stockée, la structure segmentée est soumise à des efforts importants pendant une phase de lancement. Un tel mode de réalisation permet avantageusement de protéger la structure segmentée principalement pendant ladite phase de lancement, en maintenant les panneaux élémentaires de chaque ensemble repliés entre eux.

Dans des modes particuliers de réalisation de l'invention, pour chaque ensemble, les mécanismes de maintien et de libération disposés dans une partie haute de la structure segmentée sont configurés pour fixer de façon temporaire tous les panneaux élémentaires dudit ensemble entre eux.

Dans des exemples de réalisation, chaque mécanisme de maintien et de libération comporte un tirant de gerbage mis sous tension dans un écrou de gerbage. Pour chaque ensemble, le tirant de gerbage est, au niveau d'une extrémité, solidaire fixement d'un élément de renfort, et est mis sous tension dans l'écrou de gerbage disposé au niveau d'un élément de renfort opposé. Les éléments de renfort, outre leur fonction de rigidifier les panneaux de liaison, permettent avantageusement de servir de base de fixation pour les mécanismes de maintien et de libération.

On entend par le terme « solidaire » lorsqu'il fait référence à des pièces les unes par rapport aux autres de manière classique en elle-même, que lesdites pièces sont mutuellement liées, un mouvement relatif entre elles pouvant toutefois être possible. Dans la présente description, par convention on désignera par « solidaire », des pièces étant liées l'une à l'autre par une liaison autorisant un mouvement relatif d'une pièce par rapport à l'autre. On désignera par « fixement solidaires », ou « solidaires fixement » des pièces qui sont mutuellement liées de manière fixe, c'est-à-dire de sorte qu'un mouvement relatif entre elles est impossible.)

Dans des modes particuliers de réalisation de l'invention, pour chaque ensemble, les mécanismes de maintien et de libération disposés dans une partie basse de la structure segmentée sont configurés chacun pour fixer de façon temporaire une partie des panneaux élémentaires dudit ensemble entre eux.

Dans des modes particuliers de réalisation de l'invention, pour chaque ensemble, lorsque le nombre de panneaux élémentaires dudit ensemble équivaut à 4p, p entier positif non nul, les panneaux élémentaires sont disposés symétriquement de part et d'autre d'une branche de la structure porteuse. Le tirant de gerbage est, au niveau d'une extrémité, solidaire fixement de la branche de la structure porteuse et est mis sous tension dans l'écrou de gerbage disposé au niveau du panneau élémentaire le plus éloigné de ladite branche. La structure porteuse, outre sa fonction de porter le dispositif de déploiement et la structure segmentée, permet également avantageusement de servir de base de fixation pour les mécanismes de maintien et de libération.

L'invention est également relative à un véhicule spatial comportant une caisse et une structure déployable selon au moins l'un des modes ou exemples de réalisation, fixement solidaire d'une des faces de ladite caisse par la structure porteuse. Une telle structure déployable permet avantageusement d'augmenter la surface utile de la structure segmentée, lorsqu'elle est en configuration déployée, tout en présentant un volume réduit, lorsqu'elle est en configuration stockée, lui permettant d'être stockée dans le volume imposé par la coiffe d'un lanceur dans laquelle est installé le véhicule spatial.

De manière préférentielle, mais non limitative, le véhicule spatial est un satellite.

### Brève description des figures

L'invention sera mieux comprise à la lecture de la description suivante, donnée à titre d'exemple nullement limitatif, et faite en se référant aux figures suivantes :
La figure 1 représente une vue en coupe longitudinale d'une coiffe de lanceur dans laquelle est installée un satellite comprenant un exemple de structure déployable selon l'invention, dans une configuration stockée,
La figure 2 représente une vue en coupe transversale d'une coiffe de lanceur dans laquelle est installée un satellite comprenant un exemple de structure déployable selon l'invention, dans une configuration stockée,
La figure 3 représente une vue de dessus de la structure déployable en cours de déploiement,
La figure 4 représente une vue en perspective de la structure déployable en cours de déploiement,
La figure 5 représente une vue en perspective de la structure déployable en configuration déployée,
La figure 6 représente une vue de dessus de la structure déployable en configuration déployée,
La figure 7 représente une vue en perspective et en éclaté de la structure déployable,
La figure 8 représente un exemple de panneau élémentaire de la structure segmentée,
La figure 9 représente, en perspective avant, une vue de la structure déployable,
La figure 10 représente, en perspective arrière, une vue de la structure déployable,
La figure 11 représente une vue de dessus, partielle, d'un ensemble de panneaux élémentaires de la structure segmentée, en configuration stockée,
La figure 12 représente une vue en perspective d'un ensemble de panneaux élémentaires de la structure segmentée, en configuration stockée.

Dans ces figures, des références numériques identiques d'une figure à l'autre désignent des éléments identiques ou analogues. Par ailleurs, pour des raisons de clarté, les dessins ne sont pas à l'échelle, sauf mention contraire.

### Description des modes de réalisation

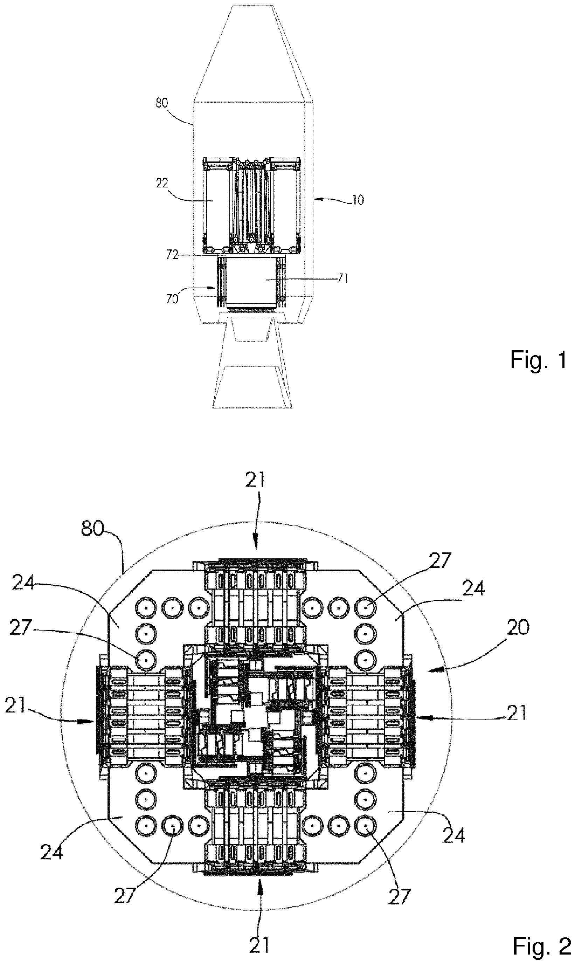

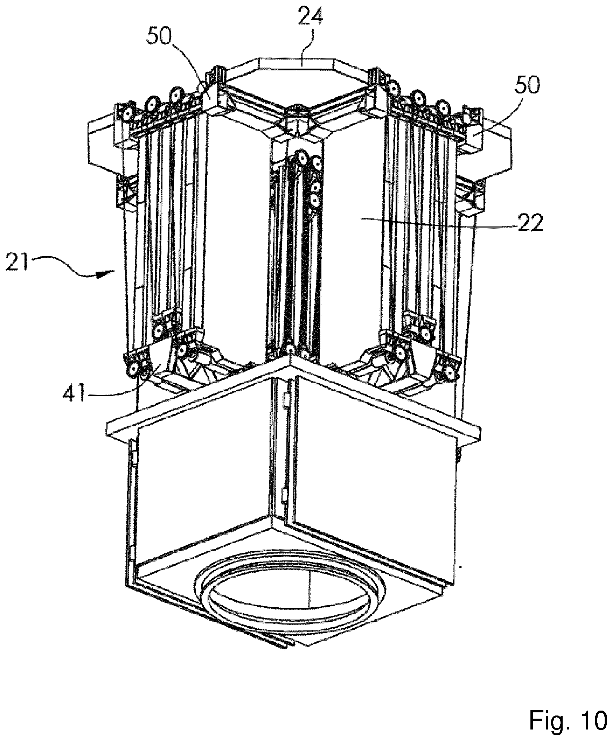

Une structure déployable 10 selon un exemple de réalisation de l'invention est à présent décrite de manière détaillée et illustrée par les figures 1 à 12.

L'invention est décrite dans le contexte préféré d'un de ses domaines d'application préférés dans lequel la structure déployable 10 est destinée à équiper un véhicule spatial.

De façon préférentielle, mais non limitative, le véhicule spatial est un satellite 70.

Il est bien entendu que l'invention n'est pas limitée au domaine spatial et peut être mise en œuvre dans d'autres domaines où une structure déployable 10 peut être déployée.

La structure déployable 10 prend deux configurations :
- une configuration stockée, permettant le stockage de la structure déployable 10, notamment pendant la mise en orbite du satellite 70 lorsque celui-ci est stocké sous une coiffe 80 de lanceur, dans un volume restreint,
- une configuration déployée correspondant quant à elle à la configuration opérationnelle de la structure déployable 10 ; la configuration déployée peut également être appelée configuration opérationnelle.

Les figures 1 et 2 représentent, respectivement dans une vue en coupe longitudinale et dans une vue en coupe transversale, la coiffe 80 de lanceur dans laquelle est installé un satellite 70 comprenant un exemple de structure déployable 10 représentée dans la configuration stockée.

Le satellite 70 se présente, de manière simplifiée, sous la forme d'une caisse 71, par exemple globalement parallélépipédique. La caisse 71 comporte des faces aptes à recevoir des structures déployables. En l'occurrence, dans l'exemple de la figure 1, le satellite 70 est équipé d'une structure déployable 10, sur une face supérieure 72 de la caisse 71.

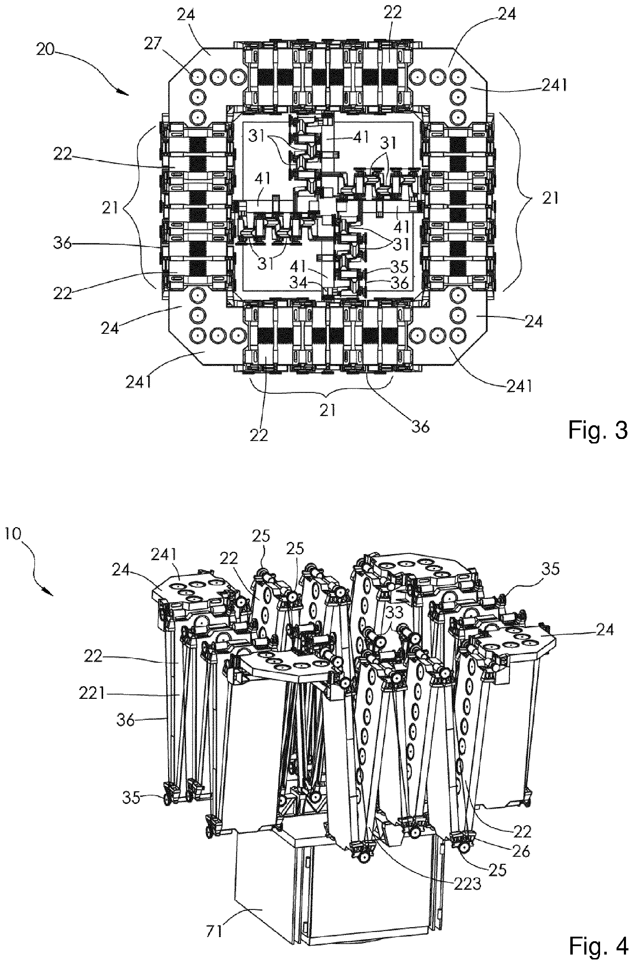

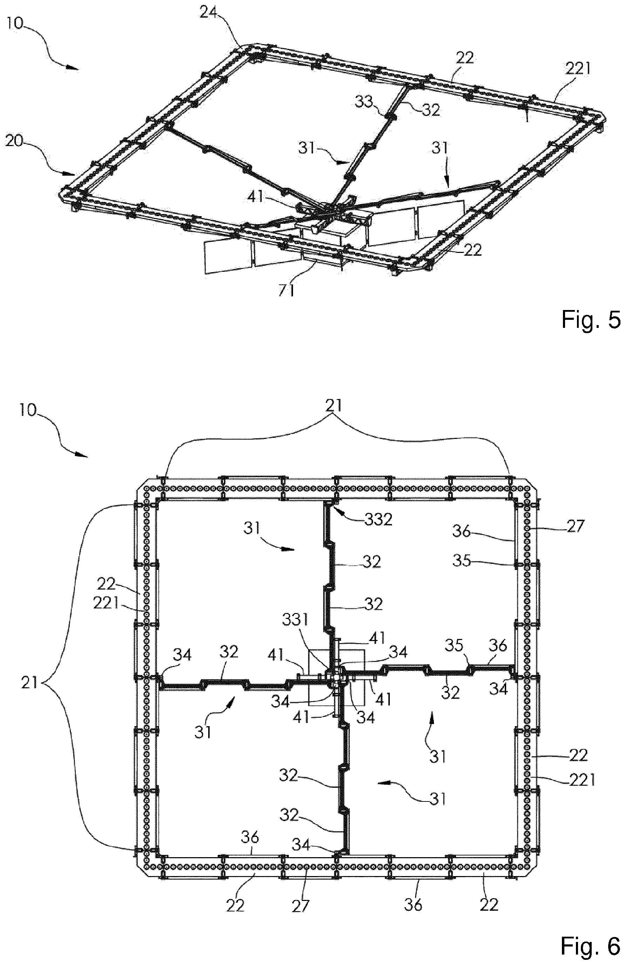

La figure 2 illustre la structure déployable 10 en configuration stockée. Les figures 3 et 4 illustrent la structure déployable 10 en cours de déploiement et les figures 5 et 6 illustrent la structure déployable 10 en configuration déployée.

La structure déployable 10 comporte, comme illustrée sur les figures 3 à 7 :
- une structure segmentée 20,
- un dispositif de déploiement 30 de la structure segmentée 20,
- une structure porteuse 40.

La structure porteuse 40 est destinée à être fixement solidaire du satellite 70. Dans l'exemple non limitatif des figures, la structure porteuse 40 est destinée à être fixement solidaire de la face supérieure 72 de la caisse 71 du satellite 70. La structure porteuse 40 sera décrite de manière détaillée ultérieurement.

### Structure segmentée 20

L'invention est décrite et illustrée dans l'exemple non limitatif où la structure segmentée 20 forme, en configuration déployée, une antenne. Il est évident que la structure segmentée 20 peut également être destinée à d'autres applications, telles que par exemple former un générateur solaire.

Comme précisé précédemment, l'invention n'est pas limitée au domaine spatial. L'invention peut également être mise en œuvre dans d'autres domaines où une structure segmentée 20 peut être déployée. Il peut ainsi s'agir par exemple d'antennes terrestres.

La structure segmentée 20 est formée d'une pluralité de panneaux différents reliés entre eux deux à deux par au moins une articulation.

Les figures 2, 7, 9 et 10 illustrent la structure segmentée 20 représentée dans la configuration stockée. Les figures 3 et 4 illustrent la structure segmentée 20 représentée en cours de déploiement. Les figures 5 et 6 illustrent la structure segmentée 20 représentée dans la configuration déployée.

En configuration déployée, la structure segmentée 20 présente préférentiellement une forme polygonale régulière creuse. En d'autres termes, la structure segmentée 20 se présente sous la forme d'un cadre de section polygonale régulière.

La structure segmentée 20 comporte N ensembles 21 de panneaux élémentaires 22. N est un nombre entier supérieur ou égal à 3.

Dans la suite de la description, on appellera par souci de concision, un ensemble de panneaux élémentaires 22, ensemble 21.

Lesdits ensembles sont reliés 2 à 2 par un panneau de liaison 24.

Lorsque la structure segmentée 20 est en configuration déployée, chaque ensemble 21 forme un côté du cadre. Le nombre N correspond ainsi au nombre de côtés souhaité pour le cadre formant la structure segmentée 20. Chaque panneau de liaison 24 forme un angle du cadre.

Chaque ensemble 21 comporte n panneaux élémentaires 22 successifs reliés entre eux 2 à 2 par des articulations. n est un nombre entier pair, positif non nul. De préférence, n est supérieur à 4.

Dans un exemple préféré de réalisation, non limitatif, illustré sur les figures, la structure segmentée 20 se présente sous la forme d'un cadre de section carrée. La structure segmentée 20 présente quatre côtés, de même longueur.

La structure segmentée 20 comporte ainsi quatre ensembles 21 de panneaux élémentaires 22 et quatre panneaux de liaison 24. Chaque ensemble 21 comporte 6 panneaux élémentaires 22.

Il est évident que la structure segmentée 20 peut prendre toute autre forme polygonale régulière creuse telle que par exemple une forme triangulaire régulière creuse (cadre avec trois côtés de même longueur), une forme hexagonale régulière creuse (cadre avec six côtés de même longueur) sans que ce soit limitatif de l'invention.

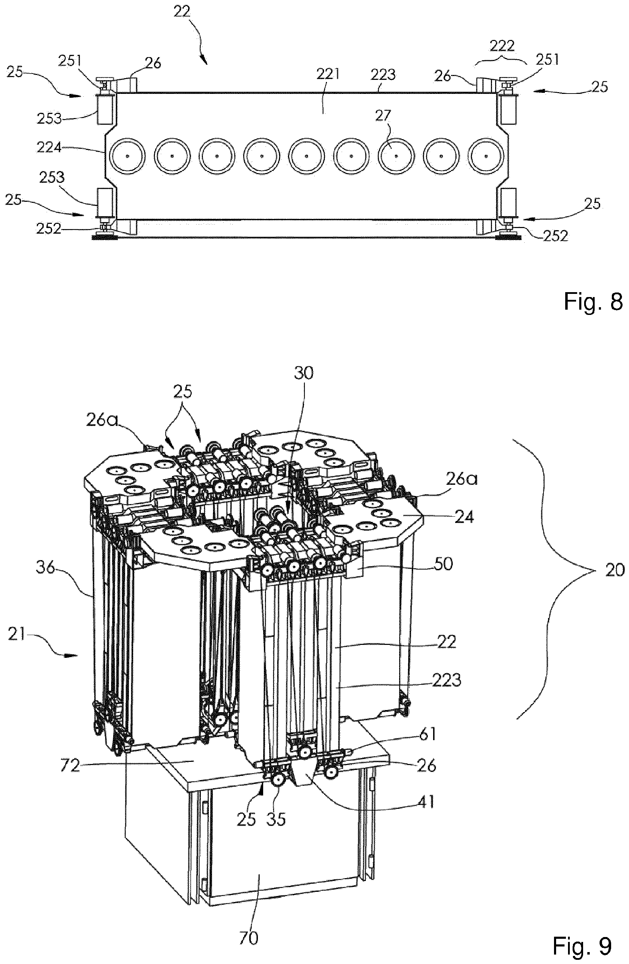

Quelle que soit la forme de la structure segmentée 20, chaque panneau élémentaire 22 se présente préférentiellement sous la forme d'une pièce longitudinale sensiblement parallélépipédique, comme illustrée sur la figure 8 (en vue de dessus). Les panneaux élémentaires 22 sont préférentiellement sensiblement identiques entre eux.

Chaque panneau de liaison 24 se présente sous la forme d'une pièce volumique sensiblement en forme d'équerre.

Les panneaux de liaison 24 présentent préférentiellement une même épaisseur que les panneaux élémentaires 22.

Les panneaux de liaison 24 sont préférentiellement sensiblement identiques entre eux.

De préférence, chaque panneau de liaison 24 est biseauté pour supprimer l'angle vif et réduire le volume final pris par la structure déployée en configuration stockée dans la coiffe 80 du lanceur.

Dans un exemple de réalisation illustré sur les figures, dans le cas où la structure segmentée 20 est une antenne, chaque panneau élémentaire 22, respectivement chaque panneau de liaison 24, comporte, au niveau d'une de leur faces, dite active, 221, 241, une pluralité de modules LICEF 27 (pour « Light Cost Effective Front-end », en terminologie anglo-saxone).

Dans l'exemple de la figure 8, chaque panneau élémentaire 22 comporte neuf modules LICEF 27 repartis à intervalle régulier sur la longueur du panneau élémentaire 22. Chaque panneau de liaison 24 comporte cinq modules répartis à intervalle régulier, comme illustré par exemple sur les figures 2 à 4.

Un panneau élémentaire 22 est relié d'une part, au niveau d'une extrémité longitudinale 222 à un panneau élémentaire 22 attenant par au moins une première articulation 25, et d'autre part, au niveau d'une extrémité longitudinale opposée, à un autre panneau élémentaire 22 attenant par au moins une première articulation 25. Les panneaux élémentaires 22 disposés aux extrémités de chaque ensemble 21, dénommés par la suite panneaux élémentaires d'extrémité, sont quant à eux reliés d'une part, au niveau d'une extrémité longitudinale 222, à un panneau élémentaire 22 attenant par au moins une première articulation 25, et d'autre part, au niveau de l'autre extrémité longitudinale, à un panneau de liaison 24 par au moins une première articulation 25.

En d'autres termes, chaque panneau élémentaire 22 est relié d'une part, au niveau d'une extrémité longitudinale 222, à un panneau élémentaire 22 attenant par au moins une première articulation 25, et d'autre part, au niveau d'une extrémité longitudinale opposée, soit à un autre panneau élémentaire 22 attenant soit à un panneau de liaison 24, par au moins une première articulation 25.

Les premières articulations 25 entre deux panneaux élémentaires 22 ou entre un panneau élémentaire d'extrémité et un panneau de liaison 24 définissent un axe de rotation intermédiaire. Les articulations 25 sont préférentiellement du type liaison pivot.

De préférence, toutes les premières articulations 25 de la structure segmentée 20 sont identiques.

Dans un exemple de réalisation, deux panneaux élémentaires 22, respectivement un panneau élémentaire d'extrémité et un panneau de liaison 24, sont articulés entre eux, par deux premières articulations 25 définissant un même axe de rotation intermédiaire.

Chaque première articulation 25 se présente sous la forme d'une chape 251, fixement solidaire d'un des deux panneaux, et d'un doigt 252, fixement solidaire de l'autre panneau (qu'il soit intermédiaire ou de liaison), réunis par un arbre 253.

De préférence, chaque panneau élémentaire 22 comporte à chaque extrémité longitudinale 222, une chape 251 et un doigt 252 pour réaliser les deux premières articulations 25.

Dans un exemple préféré de réalisation, illustré sur la figure 8, chaque panneau élémentaire 22 comporte au niveau d'un flanc longitudinal 223, une chape 251 à chaque extrémité longitudinale 222, et au niveau du flanc longitudinal 223 parallèle opposé, un doigt 252 à chaque extrémité longitudinale 222.

Dans l'exemple illustré sur la figure 8, la chape 251 et le doigt 252 sont, chacun, fixement solidaires du panneau élémentaire 22 par une flasque 26.

Dans un exemple préféré de réalisation, illustré sur la figure 8, chaque panneau de liaison comporte au niveau de chaque extrémité destinée à être reliée à un panneau élémentaire 22 attenant, une chape et un doigt agencés de sorte à coopérer avec le doigt 252 et la chape 251 dudit panneau élémentaire attenant. Les chapes et les doigts du panneau de liaison sont, chacun, fixement solidaires du panneau de liaison 24 par une deuxième flasque 26a.

La structure segmentée 20 est configurée pour passer, lors d'une phase de déploiement, d'une configuration stockée à une configuration déployée, par rotation des panneaux élémentaires 22 autour des axes de rotation intermédiaires.

Dans la configuration déployée, les panneaux élémentaires 22 de tous les ensembles 21 et les panneaux de liaison 24 sont disposés sensiblement dans un même plan, dit de déploiement. Ce plan de déploiement peut par exemple être matérialisé par un plan passant par l'ensemble des faces actives 221, 241 des panneaux élémentaires 22 et des panneaux de liaison 24.

Les panneaux élémentaires 22 sont attenants aux panneaux de liaison 24 au niveau de flancs latéraux 224 (faces les plus petites). Les panneaux élémentaires 22 et les panneaux de liaison 24 sont dans le prolongement les uns des autres pour former un polygone régulier creux.

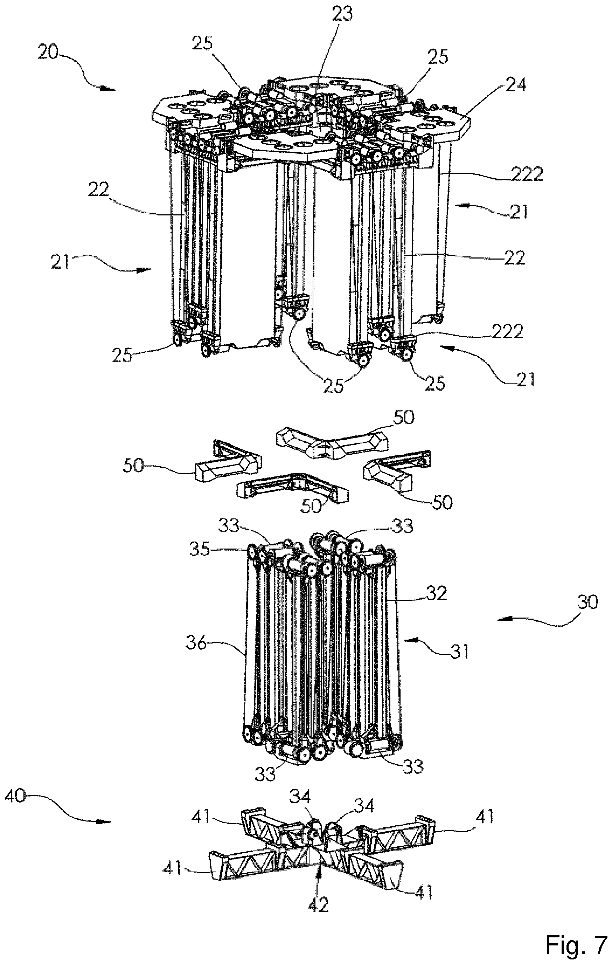

Dans la configuration stockée, seuls les panneaux élémentaires 22 de chaque ensemble 21 sont repliés. Pour chaque ensemble, les panneaux élémentaires 22 sont repliés les uns contre les autres. On parle communément de repliement en accordéon. Le repliement des panneaux élémentaires 22 de chaque ensemble 21 est indépendant. Les faces actives 221 de chaque panneau élémentaire 22 d'un ensemble 21 sont sensiblement parallèles entre elles, comme illustré sur les figures 7, 9 et 10.

Dans la configuration stockée, les panneaux de liaison 24 sont préférentiellement disposés de sorte les faces actives 241 de chaque panneau de liaison 24 sont dans un même plan, ce plan correspondant au plan de déploiement. Les panneaux de liaison 24 subissent ainsi uniquement une translation dans le plan de déploiement, lors de la phase de déploiement.

Lorsque la structure segmentée 20 est en configuration stockée, la structure segmentée 20 présente ainsi :
- une partie dite inférieure, du côté du satellite 70, dans laquelle sont situées une des extrémités longitudinales 222 de chaque panneau élémentaire 22 de chaque ensemble,
- une partie dite supérieure, dans laquelle sont situées l'extrémité longitudinale opposée de chaque panneau élémentaire 22 de chaque ensemble 21 et les panneaux de liaison 24.

Dans un mode de réalisation, lorsque le nombre de panneaux élémentaires 22 d'un ensemble 21 équivaut à 4p, p entier positif non nul, les panneaux élémentaires 22 sont sensiblement de même longueur.

Dans un autre mode de réalisation, illustré sur les figures 7, 9, 10 et 12, lorsque le nombre de panneaux élémentaires 22 d'un ensemble 21 équivaut à 4p+2, p entier positif non nul, les panneaux élémentaires 22 sont préférentiellement de longueur différente. Les deux panneaux élémentaires 22, d'un même ensemble, reliés par les premières articulations situées sensiblement à mi-longueur dudit ensemble, lorsque la structure segmentée 20 est déployée (on parlera par la suite de premières articulations centrales), présentent une longueur sensiblement identique mais plus courte que les autres panneaux élémentaires, qui eux présentent tous sensiblement une même longueur. Ces deux panneaux élémentaires 22 seront dénommés par la suite panneaux élémentaires centraux.

Lorsque la structure segmentée 20 est en configuration stockée, les panneaux élémentaires 22 repliés de chaque ensemble 21 délimitent une cavité centrale 23, comme visible sur les figures 2 et 9. La forme géométrique de la section transversale de la cavité centrale 23 dépend du nombre d'ensemble. Dans l'exemple non limitatif des figures, la structure segmentée 20 comportant quatre ensembles 21, la cavité centrale 23 présente une section transversale sensiblement carrée.

Dans un mode de réalisation préféré, la structure segmentée 20 comporte des éléments de renfort 50. De tels éléments de renfort 50 sont configurés notamment pour participer à la rigidification des panneaux de liaison 24.

Chaque élément de renfort 50 est disposé du côté d'une face opposée à la face active 241 du panneau de liaison 24.

Chaque élément de renfort 50 est préférentiellement fixement solidaire de chaque deuxième flasque 26a du flanc longitudinal 223 de chaque du panneau de liaison 24 attenant.

Dans un exemple de réalisation, l'élément de renfort 50 est fixé à chaque deuxième flasque 26a du flanc longitudinal 223 de chaque panneau de liaison 24 attenant par vissage.

Dans l'exemple non limitatif des figures, le nombre de panneau de liaison 24 étant de quatre, les éléments de renfort 50 sont au nombre de quatre.

Chaque élément de renfort 50 se présente préférentiellement sous la forme d'une équerre.

Chaque élément de renfort 50 est dimensionné et positionné de telle sorte que, lorsque la structure segmentée 20 est en configuration stockée, ledit élément de renfort vient en appui contre les flasques 26 situées au niveau du flanc du panneau élémentaire d'extrémité de chaque ensemble 21 attenant respectif.

### Dispositif de déploiement

Le dispositif de déploiement 30 est configuré pour placer la structure segmentée 20 dans la configuration déployée.

Le dispositif de déploiement 30 comporte au moins un bras articulé 31. De préférence, le dispositif de déploiement 30 comporte jusqu'à N bras articulés.

De manière encore plus préférentielle, le dispositif de déploiement 30 comporte N bras articulés 31. Le dispositif de déploiement 30 comporte ainsi autant de bras articulés 31 que la structure segmentée 20 comporte d'ensembles 21.

Dans la suite de la description, sans que ce soit limitatif de l'invention, on considérera que le dispositif de déploiement comporte quatre bras articulés.

Chaque bras articulé 31 est articulé, au niveau d'une première extrémité 311, à la structure porteuse 40, décrite ultérieurement. Chaque bras articulé 31 est articulé respectivement, au niveau d'une seconde extrémité 312, opposée à la première extrémité 311, à un ensemble 21 de la structure segmentée 20.

Chaque bras articulé 31 comporte une pluralité d'éléments 32 successifs reliés entre eux deux à deux par une deuxième articulation 33.

La deuxième articulation 33 est préférentiellement une liaison pivot.

De préférence, comme pour les panneaux élémentaires 22 et les panneaux de liaison 24, chaque deuxième articulation 33 se présente sous la forme d'une chape, fixement solidaire d'un des deux bras articulés, et d'un doigt, fixement solidaire de l'autre bras articulé, réunis par un arbre.

Dans l'exemple non limitatif des figures, chaque bras articulé 31 comporte quatre éléments 32 successifs.

Les éléments 32 des bras articulés 31 présentent chacun la forme d'une tige rigide. Les bras articulés 31 sont articulés de sorte à permettre le déploiement de la structure segmentée 20 dans un sens l'éloignant du satellite 70.

En configuration déployée, les bras articulés 31 sont déployés. Les éléments 32 de chaque bras articulé 31 sont dimensionnés en longueur de telle sorte que lorsque les bras articulés 31 sont déployés, la structure segmentée 20 est en configuration déployée, c'est-à-dire que les panneaux élémentaires 22 de chaque ensemble 21 et les panneaux de liaison 24 sont tous dans le plan de déploiement.

En configuration stockée, les bras articulés 31 sont repliés au niveau des deuxièmes articulations 33. L'ensemble des bras articulés 31 repliés prend place dans la cavité centrale 23. Pour chaque bras articulé 31, les éléments 32 sont repliés les uns contre les autres de telle sorte qu'ils peuvent être stockés chacun dans une partie de la cavité centrale 23.

Dans l'exemple non limitatif de l'invention, chaque bras articulé 31 replié prend place dans un quart de la cavité centrale 23.

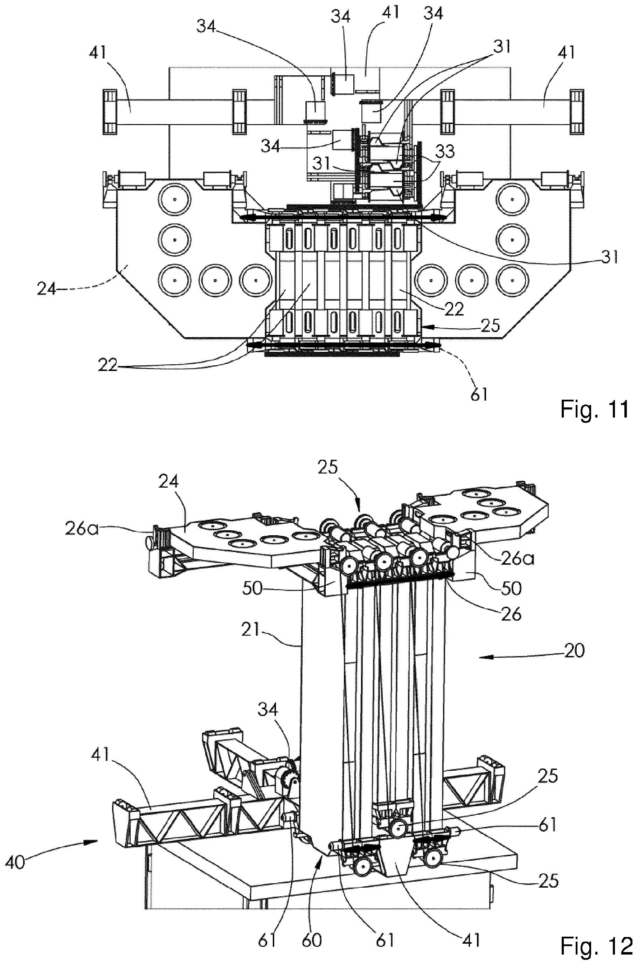

Dns une forme de réalisation, comme illustré figures 3 et 11, pour réduire le volume de stockage de chaque bras articulé, deux éléments 32 successifs d'un bras articulé 31 ne sont pas agencés en vis-à-vis sur l'arbre de la deuxième articulation 33 associée, mais en décalé. Les éléments 32 de chaque bras articulé 31 sont alors repliés en quinconce.

Lors de la phase de déploiement, pour passer de la configuration stockée à la configuration déployée, le déploiement des bras articulés 31 est préférentiellement synchronisé de sorte à réaliser un déploiement simultané des ensembles 21. Dans un exemple préféré de réalisation, de manière connue en soi, des actionneurs 34 pilotés et des systèmes poulies/câbles permettent avantageusement de réaliser la synchronisation du déploiement des bras articulés 31 et le déploiement simultané des ensembles 21.

Une poulie 35 est disposée au niveau de chaque première et deuxième articulation. Chaque poulie 35 est solidaire de l'arbre de l'articulation associée. Pour chaque ensemble 21 de la structure segmentée 20, des câbles 36 relient les poulies 35 de chaque première articulation 25. De même, pour chaque bras articulé, des câbles 36 relient les poulies 35 de chaque deuxième articulation 33. Les poulies constituent uniquement des guides pour les câbles. Chaque bras articulé 31 est relié, au niveau de deuxièmes articulations 33 situées aux première et seconde extrémités dudit bras articulé, à un actionneur 34. Les actionneurs 34 reliés à la première extrémité 311 de chaque bras articulé 31 sont solidaires fixement de la structure porteuse 40. Les actionneurs 34 reliés à la seconde extrémité 312 de chaque bras articulé 31 sont solidaires fixement de la poulie 35 associée à une des deux premières articulations centrales.

Ainsi, seulement huit actionneurs, au niveau de huit articulations (4 premières articulations centrales, 4 secondes articulations), sont nécessaires pour lancer le déploiement des bras articulés 31 et des ensembles 21, les autres articulations sont entrainées par les systèmes poulies/câbles. Les huit actionneurs doivent fonctionner de manière coordonnée dans la mesure où les mouvements des bras articulés 31 et des ensembles 21 sont couplés.

### La structure porteuse 40

Comme décrit précédemment, la structure porteuse 40 est destinée à être fixée sur le satellite 70.

La structure porteuse 40 se présente sous la forme générale d'une croix, ou astérisque, à N branches 41, N entier supérieur ou égal à 3.

La structure porteuse 40 comporte autant de branches 41 que la structure segmentée 20 comporte d'ensembles 21. Les branches 41 présentent de préférence une même longueur.

Dans l'exemple non limitatif des figures, la structure porteuse 40 se présente sous la forme d'une croix à quatre branches.

La structure porteuse 40 comporte préférentiellement une région centrale 42 pour la fixation des actionneurs 34 destinés à être reliés chacun à la deuxième articulation 33 située au niveau de la première extrémité 311 d'un bras articulé. Chaque branche 41 est en lien avec un ensemble 21.

Dans un mode de réalisation, lorsque le nombre de panneaux élémentaires 22 d'un ensemble 21 équivaut à 4p, p entier positif non nul, la branche 41 qui lui est associée est agencée de sorte que, lorsque la structure segmentée 20 est en configuration stockée, les premières articulations 25 reliant deux panneaux élémentaires 22 d'un ensemble 21 et situées en partie basse de la structure segmentée 20, sont réparties symétriquement de part et d'autre de ladite branche.

Dans un autre mode de réalisation, lorsque le nombre de panneaux élémentaires 22 d'un ensemble 21 équivaut à 4p+2, p entier positif non nul, la branche 41 qui lui est associée est agencée de sorte que, lorsque la structure segmentée 20 est en configuration stockée, les premières articulations centrales, situées en partie basse de la structure segmentée 20, reposent sur ladite branche et les autres premières articulations 25 situées en partie basse de la structure segmentée 20 sont disposées symétriquement de part et d'autre de ladite branche. En d'autres termes, les panneaux élémentaires 22 centraux présentent, par rapport à la longueur des autres panneaux, une longueur sensiblement inférieure d'une hauteur de ladite branche. Les figures illustrent le cas où le nombre de panneaux élémentaires 22 de chaque ensemble 21 est de six.

### Le dispositif de gerbage 60

Dans un mode de réalisation, lorsque la structure déployable 10 est destinée à être utilisée pour le domaine spatial, la structure segmentée 20, en configuration stockée, est soumise à des efforts importants lors de la phase de lancement et de mise en poste du satellite. Afin de protéger la structure segmentée 20 pendant cette phase, ladite structure segmentée 20 est maintenue repliée et immobilisée de façon temporaire. La structure segmentée 20 est gerbée, c'est-à-dire qu'elle est maintenue dans cette configuration stockée, sur le satellite 70 par un dispositif de gerbage 60.

Ce dispositif de gerbage 60 comprend une pluralité de mécanismes de maintien et de libération 61. Ces mécanismes de maintien et de libération 61 sont généralement connus sous le sigle HRM (pour « Hold on and Release Mechanism » selon la terminologie anglo-saxone).

Dans un exemple préféré de réalisation, un mécanisme de maintien et de libération 61 comporte un tirant de gerbage mis sous tension dans un écrou de gerbage fixé à une pièce rigide. Un mécanisme de maintien et de libération 61 comporte en outre un système de libération. Après la phase de lancement et la mise en poste du satellite, le système de libération est actionné, par exemple en cassant le tirant de gerbage

Pour chaque ensemble 21, le dispositif de gerbage 60 comporte des mécanismes de maintien et de libération 61, agencés d'une part en partie haute de la structure segmentée et d'autre part en partie basse de la structure segmentée.

Pour chaque ensemble 21, les mécanismes de maintien et de libération 61 disposés en partie haute de la structure segmentée sont configurés pour fixer de façon temporaire, et mettre sous tension, tous les panneaux élémentaires 22 dudit ensemble 21 entre eux. Les mécanismes de maintien et de libération 61 sont préférentiellement au nombre de deux. Lesdits deux mécanismes de maintien et de libération 61 sont disposés de part et d'autre des panneaux élémentaires 22, coté flanc longitudinal 223 desdits panneaux élémentaires 22, comme illustré sur la figure 11. Sur cette figure, les deux mécanismes de maintien et de libération 61 sont chacun symbolisés par une double flèche pour illustrer leur positionnement caché au niveau de l'ensemble 21. La figure 12 représente un des deux mécanismes de maintien et de libération 61 également symbolisés par une double flèche.

De préférence, pour chaque mécanisme de maintien et de libération, une extrémité du tirant de gerbage est solidaire fixement d'un élément de renfort 50. Le tirant de gerbage traverse des orifices aménagés dans les flasques 26, disposées du même côté, de chaque panneau élémentaire 22. Le tirant de gerbage est mis sous tension dans l'écrou de gerbage disposé au niveau de l'autre élément de renfort 50.

Pour chaque ensemble 21, les mécanismes de maintien et de libération disposés en partie basse de la structure segmentée sont configurés chacun pour fixer de façon temporaire, et mettre sous tension, une partie des panneaux élémentaires 22 dudit ensemble entre eux. Les mécanismes de maintien et de libération 61 sont au nombre de quatre. Deux mécanismes de maintien et de libération 61 sont disposés du côté d'un des flancs longitudinaux 223 des panneaux élémentaires 22, et les deux autres mécanismes de maintien et de libération 61 sont disposés du côté des flancs longitudinaux 223 opposés des panneaux élémentaires 22. Sur la figure 12, uniquement deux des mécanismes de maintien et de libération 61 sont chacun symbolisés par une double flèche pour illustrer leur positionnement caché au niveau de l'ensemble 21.

Dans un mode de réalisation, lorsque le nombre de panneaux élémentaires d'un ensemble 21 équivaut à 4p (p entier positif non nul), pour chaque mécanisme de maintien et de libération 61, une extrémité du tirant de gerbage est solidaire fixement d'une branche 41 de la structure porteuse 40 qui est liée audit ensemble. Le tirant de gerbage traverse des orifices aménagés dans les flasques 26, disposées du même côté, des panneaux élémentaires 22 positionnés d'un même côté de la branche 41 associée à l'ensemble. Le tirant de gerbage est mis sous tension dans l'écrou de gerbage disposé au niveau du panneau élémentaire 22 d'extrémité.

Dans un autre mode de réalisation, comme illustré figure 12, lorsque le nombre de panneaux élémentaires d'un ensemble 21 équivaut à 4p+2 (p entier positif non nul), pour chaque mécanisme de maintien et de libération, une extrémité du tirant de gerbage est solidaire fixement d'une branche 41 de la structure porteuse 40 qui est liée audit ensemble. Le tirant de gerbage traverse des orifices aménagés dans les flasques 26, disposées du même côté, des panneaux élémentaires 22 positionnés d'un même côté de la branche 41 associée à l'ensemble. Le tirant de gerbage est mis sous tension dans l'écrou de gerbage disposé au niveau du panneau élémentaire 22 d'extrémité.

Aucun tirant de gerbage ne traverse les flasques 26 des panneaux élémentaires 22 centraux associées aux premières articulations centrales.

Avec une telle configuration, les premières articulations 25 de la structure segmentée 20 sont protégées lors de la phase de lancement et de mise en poste du satellite. Tous les efforts transitent uniquement par les mécanismes de maintien et de libération.

Après la phase de lancement et la mise en poste du satellite, le système de libération de chaque mécanisme de maintien et de libération 61 est actionné, en cassant le tirant de gerbage associé, libérant ainsi les panneaux élémentaires 22 de chaque ensemble 21 et permettant leur déploiement grâce aux bras articulés 21, aux actionneurs 34 et aux systèmes poulies/câbles.

## Revendications

1. Structure déployable (10) comportant:
- une structure porteuse (40),
- une structure segmentée (20) comportant N ensembles (21) de n panneaux élémentaires (22) adjacents articulés deux à deux entre eux, N étant un nombre entier supérieur ou égal à 3, et n un nombre entier pair, positif non nul,
les N ensembles (21) étant reliés deux à deux par un panneau de liaison (24), la structure segmentée (20) étant configurée pour passer, lors d'une phase de déploiement :
o d'une configuration stockée dans laquelle, pour chaque ensemble (21), les panneaux élémentaires (22) sont repliés les uns contre les autres,
o à une configuration déployée, dans laquelle les panneaux intermédiaires (22) de chaque ensemble (21) et les panneaux de liaison (24) sont disposés dans un même plan, dite plan de déploiement, ladite structure segmentée présentant, en configuration déployée, une forme polygonale régulière creuse, **caractérisé en ce que**,
dans la configuration stockée, lesdits panneaux élémentaires (22) repliés de chaque ensemble délimitent une cavité centrale (23), et **en ce que** la structure déployable (10) comporte
- un dispositif de déploiement (30) comportant au moins un bras articulé (31), ledit au moins un bras articulé (31) comportant une pluralité d'éléments (32) successifs articulés deux à deux entre eux, une première extrémité (311) dudit au moins un bras articulé (31) étant reliée à la structure porteuse (40) et une seconde extrémité (312) dudit au moins un bras articulé (31) étant reliée à un desdits ensembles (21), le au moins un bras articulé (31) étant configuré pour passer de la configuration stockée dans laquelle les éléments (32) dudit au moins un bras articulé sont repliés, à la configuration déployée dans laquelle le au moins un bras articulé est déployé, le au moins un bras articulé, dans la configuration stockée, étant disposé dans la cavité centrale (23).

2. Structure déployable (10) selon la revendication 1, dans laquelle la structure segmentée (20) comporte des éléments de renfort (50), chaque élément de renfort (50) étant disposé au niveau d'un panneau de liaison (24).

3. Structure déployable (10) selon l'une des revendications précédentes dans laquelle la structure porteuse (40) se présente sous la forme d'une croix à N branches (41).

4. Structure déployable (10) selon la revendication 3 dans laquelle les panneaux élémentaires (22) adjacents de chaque ensemble (21) sont articulés deux à deux entre eux par une première articulation (25).

5. Structure déployable (10) selon la revendication 4 dans laquelle, lorsque le nombre de panneaux élémentaires (22) de chaque ensemble (21) équivaut à 4p, p entier positif non nul, chaque branche (41) de la structure porteuse est agencée de sorte que, lorsque la structure segmentée (20) est en configuration stockée, les premières articulations (25) d'un ensemble (21), situées dans une partie basse de la structure segmentée (20), sont réparties symétriquement de part et d'autre d'une branche.

6. Structure déployable (10) selon la revendication 4 dans laquelle, lorsque le nombre de panneaux élémentaires (22) de chaque ensemble (21) équivaut à 4p+2, p entier positif non nul :
- deux panneaux élémentaires (22), d'un même ensemble (21), reliés par une première articulation (25) située sensiblement à mi-longueur dudit ensemble, lorsque la structure segmentée 20 est déployée, et dite première articulation centrale, présentent une longueur inférieure aux autres panneaux élémentaires (22),
- chaque branche (41) de la structure porteuse est agencée de sorte que, lorsque la structure segmentée (20) est en configuration stockée, la première articulation centrale, située dans une partie basse de la structure segmentée (20), reposent sur une branche, et les autres premières articulations (25) de l'ensemble, situées dans la partie basse de la structure segmentée (20), sont disposées symétriquement de part et d'autre de ladite branche.

7. Structure déployable (10) selon l'une des revendications précédentes comportant un dispositif de gerbage (60) pour maintenir temporairement la structure segmentée (20) en configuration stockée, le dispositif de gerbage comportant une pluralité de mécanismes de maintien et de libération (61) pour chaque ensemble (21).

8. Structure déployable (10) selon la revendication 7 dans laquelle, pour chaque ensemble (21), les mécanismes de maintien et de libération (61) disposés dans une partie haute de la structure segmentée sont configurés pour fixer de façon temporaire tous les panneaux élémentaires (22) dudit ensemble (21) entre eux.

9. Structure déployable (10) selon la revendication 2 et la revendication 8, dans laquelle chaque mécanisme de maintien et de libération (61) comporte un tirant de gerbage mis sous tension dans un écrou de gerbage, et dans laquelle, pour chaque ensemble (21), le tirant de gerbage est, au niveau d'une extrémité, solidaire fixement d'un élément de renfort (50), et est mis sous tension dans l'écrou de gerbage disposé au niveau d'un élément de renfort (50) opposé.

10. Structure déployable (10) selon l'une des revendications 7 à 9, dans laquelle, pour chaque ensemble (21), les mécanismes de maintien et de libération (61) disposés dans une partie basse de la structure segmentée sont configurés chacun pour fixer de façon temporaire une partie des panneaux élémentaires (22) dudit ensemble (21) entre eux.

11. Structure déployable (10) selon la revendication 3 et la revendication 10 dans laquelle, pour chaque ensemble, lorsque le nombre de panneaux élémentaires dudit ensemble (21) équivaut à 4p, p entier positif non nul, les panneaux élémentaires sont disposés symétriquement de part et d'autre d'une branche (41) de la structure porteuse (40), et le tirant de gerbage est, au niveau d'une extrémité, solidaire fixement de la branche (41) de la structure porteuse (40), et est mis sous tension dans l'écrou de gerbage disposé au niveau du panneau élémentaire (22) le plus éloigné de ladite branche (41).

12. Véhicule spatial (70) comportant une caisse (71) et une structure déployable (10) selon l'une des revendications précédentes, fixement solidaire d'une des faces de ladite caisse par la structure porteuse (40).

## Patentansprüche

1. Ausfahrbare Struktur (10), umfassend:
- eine Stützstruktur (40),
- eine segmentierte Struktur (20), die N Sätze (21) von n elementaren Platten (22) umfasst, die paarweise aneinander angelenkt sind, wobei N eine ganze Zahl größer oder gleich 3 und n eine gerade, positive ganze Zahl, die nicht gleich Null ist, ist, wobei die N Sätze (21) paarweise durch eine Verbindungsplatte (24) verbunden sind, wobei die segmentierte Struktur (20) so konfiguriert ist, dass sie während einer Einsatzphase zu Folgendem wechselt:
• von einer Aufbewahrungskonfiguration, in der bei jedem Satz (21) die elementaren Platten (22) zusammengeklappt sind,
• zu einer ausgefahrenen Konfiguration, in der die Zwischenplatten (22) jedes Satzes (21) und die Verbindungsplatten (24) in der gleichen Ebene angeordnet sind, die als Einsatzebene bezeichnet wird, wobei die segmentierte Struktur in der ausgefahrenen Konfiguration eine hohle regelmäßige polygonale Form aufweist,
**dadurch gekennzeichnet, dass** die zusammengeklappten elementaren Platten (22) jedes Satzes in der Aufbewahrungskonfiguration einen zentralen Hohlraum (23) begrenzen, und dadurch, dass die ausfahrbare Struktur (10) Folgendes umfasst:
- eine Ausbringvorrichtung (30), die mindestens einen Gelenkausleger (31) umfasst, wobei der mindestens eine Gelenkausleger (31) mehrere aufeinanderfolgende Elemente (32) umfasst, die paarweise miteinander gelenkig verbunden sind, wobei ein erstes Ende (311) des mindestens einen Gelenkauslegers (31) mit der Trägerstruktur (40) verbunden ist und ein zweites Ende (312) des mindestens einen Gelenkauslegers (31) mit einem der Sätze (21) verbunden ist, wobei der mindestens eine Gelenkausleger (31) so konfiguriert ist, dass er von der Aufbewahrungskonfiguration, in der die Elemente (32) des mindestens einen Gelenkauslegers ausgefahren sind, zu der ausgefahrenen Konfiguration, in der der mindestens eine Gelenkausleger ausgefahren ist, wechselt, wobei der mindestens eine Gelenkausleger in der Aufbewahrungskonfiguration in dem zentralen Hohlraum (23) angeordnet ist.

2. Ausfahrbare Struktur (10) nach Anspruch 1, wobei die segmentierte Struktur (20) Verstärkungselemente (50) umfasst, wobei jedes Verstärkungselement (50) auf Höhe einer Verbindungsplatte (24) angeordnet ist.

3. Ausfahrbare Struktur (10) nach einem der vorhergehenden Ansprüche, wobei die Stützstruktur (40) in Form eines Kreuzes mit N Armen (41) erscheint.

4. Ausfahrbare Struktur (10) nach Anspruch 3, wobei die elementaren Platten (22) benachbart zu jedem Satz (21) paarweise durch ein erstes Gelenk (25) miteinander gelenkig verbunden sind.

5. Ausfahrbare Struktur (10) nach Anspruch 4, wobei, wenn die Anzahl der elementaren Platten (22) jedes Satzes (21) 4p entspricht, p eine positive ganze Zahl ist, die nicht gleich Null ist, wobei jeder Arm (41) der Trägerstruktur derart angeordnet ist, dass, wenn sich die segmentierte Struktur (20) in der Aufbewahrungskonfiguration befindet, die ersten Gelenke (25) eines Satzes (21), die sich in einem unteren Teil der segmentierten Struktur (20) befinden, symmetrisch auf beiden Seiten eines Arms verteilt sind.

6. Ausfahrbare Struktur (10) nach Anspruch 4, wobei, wenn die Anzahl der elementaren Platten (22) jedes Satzes (21) 4p+2 entspricht, p eine positive ganze Zahl ist, die nicht gleich Null ist:
- zwei elementare Platten (22) des gleichen Satzes (21), die durch ein erstes Gelenk (25), das sich im Wesentlichen auf halber Länge des Satzes befindet, wenn die segmentierte Struktur 20 ausgefahren ist, und das erste zentrale Gelenk verbunden sind, eine kleinere Länge als die anderen elementaren Platten (22) aufweisen,
- jeder Arm (41) der Stützstruktur so angeordnet ist, dass, wenn sich die segmentierte Struktur (20) in der Aufbewahrungskonfiguration befindet, das erste zentrale Gelenk in einem unteren Teil der segmentierten Struktur (20) angeordnet ist, der auf einem Arm ruht, und die anderen ersten Gelenke (25) des Satzes, die sich im unteren Teil der segmentierten Struktur (20) befinden, symmetrisch auf beiden Seiten des Arms angeordnet sind.

7. Ausfahrbare Struktur (10) nach einem der vorhergehenden Ansprüche, umfassend eine Stapelvorrichtung (60) zum temporären Halten der segmentierten Struktur (20) in der Aufbewahrungskonfiguration, wobei die Stapelvorrichtung eine Vielzahl von Halte- und Freigabemechanismen (61) für jeden Satz (21) umfasst.

8. Ausfahrbare Struktur (10) nach Anspruch 7, wobei die Halte- und Freigabemechanismen (61), die in einem oberen Teil der segmentierten Struktur angeordnet sind, für jedes Satz (21) so konfiguriert sind, dass sie alle elementaren Platten (22) des Satzes (21) zwischen ihnen temporär halten.

9. Ausfahrbare Struktur (10) nach Anspruch 2 und Anspruch 8, wobei jeder Halte- und Freigabemechanismus (61) eine Niederhaltezugstange umfasst, die in einer Stapelmutter gespannt ist, und wobei die Niederhaltezugstange für jeden Satz (21) auf Höhe eines Endes fest an einem Verstärkungselement (50) befestigt ist, und in der Stapelmutter auf Höhe eines gegenüberliegenden Verstärkungselement (50) gespannt ist.

10. Ausfahrbare Struktur (10) nach einem der Ansprüche 7 bis 9, wobei die Halte- und Freigabemechanismen (61), die in einem unteren Teil der segmentierten Struktur angeordnet sind, für jeden Satz (21) jeweils so konfiguriert sind, dass sie einen Teil der elementaren Platten (22) des Satzes (21) zwischen sich temporär befestigen.

11. Ausfahrbare Struktur (10) nach Anspruch 3 und Anspruch 10, wobei für jeden Satz, wenn die Anzahl der elementaren Platten des Satzes (21) 4p entspricht, wobei p eine positive ganze Zahl ist, die nicht gleich Null ist, die elementaren Platten symmetrisch auf beiden Seiten eines Arms (41) der Trägerstruktur (40) angeordnet sind und die Niederhaltezugstange auf Höhe eines Endes fest an dem Arm (41) der Trägerstruktur (40) befestigt ist und in der Stapelmutter auf Höhe der gegenüberliegenden elementaren Platte (22) gespannt ist, die am weitesten von dem Arm (41) entfernt ist.

12. Raumfahrzeug (70), umfassend eine Karosserie (71) und eine ausfahrbare Struktur (10) nach einem der vorhergehenden Ansprüche, die fest an einer Seite der Karosserie durch die Stützstruktur (40) befestigt ist.

## Claims

1. Deployable structure (10) including:
- a support structure (40),
- a segmented structure (20) including N sets (21) of n adjacent elementary panels (22) articulated together in pairs, N being an integer greater than or equal to 3, and n an even, non-zero positive integer, the N sets (21) being connected in pairs by a connection panel (24), the segmented structure (20) being configured to switch, during a deployment phase:
o from a stored configuration wherein, for each set (21), the elementary panels (22) are folded against each other,
o to a deployed configuration, wherein the intermediate panels (22) of each set (21) and the connection panels (24) are disposed in the same plane, called the deployment plane, said segmented structure having, in the deployed configuration, a hollow regular polygonal shape,
**characterised in that**, in the stored configuration, said folded elementary panels (22) of each set delimit a central cavity (23), and **in that** the deployable structure (10) includes
- a deployment device (30) including at least one articulated arm (31), said at least one articulated arm (31) including a plurality of successive elements (32) articulated together in pairs, a first end (311) of said at least one articulated arm (31) being connected to the support structure (40) and a second end (312) of said at least one articulated arm (31) being connected to one of said sets (21),
the at least one articulated arm (31) being configured to switch from the stored configuration wherein the elements (32) of said at least one articulated arm are folded, to the deployed configuration wherein the at least one articulated arm is deployed, the at least one articulated arm, in the stored configuration, being disposed in the central cavity (23).

2. Deployable structure (10) according to claim 1, wherein the segmented structure (20) includes reinforcing elements (50), each reinforcing element (50) being disposed at a connection panel (24).

3. Deployable structure (10) according to one of the preceding claims wherein the support structure (40) is in the shape of a cross with N branches (41).

4. Deployable structure (10) according to claim 3 wherein the elementary panels (22) adjacent of each set (21) are articulated in pairs to each other by a first articulation (25) .

5. Deployable structure (10) according to claim 4 wherein, when the number of elementary panels (22) of each set (21) is equivalent to 4p, p non-zero positive integer, each branch (41) of the support structure is arranged so that, when the segmented structure (20) is in the stored configuration, the first articulations (25) of a set (21), located in a lower part of the segmented structure (20), are distributed symmetrically on either side of a branch.

6. Deployable structure (10) according to claim 4 wherein, when the number of elementary panels (22) of each set (21) is equivalent to 4p+2, p non-zero positive integer:
- two elementary panels (22), of the same set (21), connected by a first articulation (25) located substantially at mid-length of said set, when the segmented structure (20) is deployed, and called first central articulation, have a length lower than the other elementary panels (22),
- each branch (41) of the support structure is arranged so that, when the segmented structure (20) is in the stored configuration, the first central articulation, located in a lower part of the segmented structure (20), rests on a branch, and the other first articulations (25) of the set, located in the lower part of the segmented structure (20), are disposed symmetrically on either side of said branch.

7. Deployable structure (10) according to one of the preceding claims including a stacking device (60) for temporarily maintaining the segmented structure (20) in the stored configuration, the stacking device including a plurality of holding and releasing mechanisms (61) for each set (21).

8. Deployable structure (10) according to claim 7 wherein, for each set (21), the holding and releasing mechanisms (61) disposed in an upper part of the segmented structure are configured to temporarily fix all the elementary panels (22) of said set (21) together.

9. Deployable structure (10) according to claim 2 and claim 8, wherein each holding and releasing mechanism (61) includes a stacking tie rod tensioned in a stacking nut, and wherein, for each set (21), the stacking tie rod is, at one end, fixedly integral with a reinforcing element (50), and is tensioned in the stacking nut disposed at an opposite reinforcing element (50).

10. Deployable structure (10) according to one of claims 7 to 9, wherein, for each set (21), the holding and releasing mechanisms (61) disposed in a lower part of the segmented structure are each configured to temporarily fix part of the elementary panels (22) of said set (21) together.

11. Deployable structure (10) according to claim 3 and claim 10 wherein, for each set, when the number of elementary panels of said set (21) is equivalent to 4p, p non-zero positive integer, the elementary panels are disposed symmetrically on either side of a branch (41) of the support structure (40), and the stacking tie rod is, at one end, fixedly integral with the branch (41) of the support structure (40), and is tensioned in the stacking nut disposed at the elementary panel (22) farthest from said branch (41).

12. Space vehicle (70) including a body (71) and a deployable structure (10) according to one of the preceding claims, fixedly integral with one of the faces of said body by the support structure (40).
